# EUROPÄISCHE PATENTSCHRIFT

(11) **EP 2 076 751 B1**
(45) Veröffentlichungstag und Bekanntmachung des Hinweises auf die Patenterteilung: **18.05.2011**
(21) Anmeldenummer: 07803369.3
(22) Anmeldetag: 10.09.2007
(51) Int. Cl.: G01M 3/20

(54) **SCHNÜFFELLECKSUCHER**
SNIFFING LEAK DETECTOR
DETECTEUR RENIFLEUR DE FUITES

(30) Priorität: 10.10.2006 DE 102006047856
(43) Veröffentlichungstag der Anmeldung: 08.07.2009
(73) Patentinhaber: Inficon GmbH, 50968 Köln (DE)
(72) Erfinder: WETZIG, Daniel, 50999 Köln (DE); ROLFF, Norbert, 50169 Horrem (DE)
(74) Vertreter: von Kreisler Selting Werner
(86) Internationale Anmeldenummer: PCT/EP2007/059452
(87) Internationale Veröffentlichungsnummer: WO 2008/043628

(56) Entgegenhaltungen:
- EP-A- 0 718 613
- WO-A-2006/120122
- DE-A1- 4 408 877
- DE-A1- 4 445 829

## Beschreibung

Die Erfindung betrifft einen Schnüffellecksucher mit Prüfgassensor und insbesondere einen Schnüffellecksucher mit weitem Messbereich der Leckraten.

Die (nicht vorveröffentlichte) Patentanmeldung DE 10 2005 021 909 beschreibt einen Schnüffellecksucher z. B. mit Prüfgassensor, bei dem eine Schnüffelsonde über eine Schnüffelleitung mit dem Prüfgassensor verbunden ist. Eine Vakuumpumpe erzeugt ein Vakuum in einem vor dem Quarzfenster des Prüfgassensors angeordneten Saugraum. Dieser Schnüffellecksucher erlaubt verschiedene Betriebsmoden, nämlich Normal, Standby, Schutz vor Verseuchung und Simulation Grobleck. Bei dem Schutz vor Verseuchung wird ein Belüftungsventil kurzzeitig mit dem Saugraum des Prüfgassensors verbunden, wodurch eine Spülwirkung entsteht.

Die üblichen Analysegeräte zur Schnüffellecksuche mit hoher Nachweisempfindlichkeit für Helium benutzen für den Nachweis massenspektroskopische Methoden. Diese erfordern Hochvakuumbedingungen von p<10⁻⁴ mbar. Derartige Druckbedingungen werden mit einem Pumpsystem realisiert, das eine Turbomolekularpumpe erfordert. Diese Art von Pumpe ist aufwendig. Hinzu kommen plötzliche Ausfälle aufgrund von durchbrennenden Filamenten des Massenspektrometers.

In EP 0718613 A1 ist ein Schnüffellecksucher beschrieben, bei dem die Schnüffelleitung mit einem Flussteiler verbunden ist, welcher das angesaugte Gas in zwei Ströme aufteilt. Der eine Teilstrom wird über einen Durchflussmesser einer Membranpumpe zugeführt und der andere Teilstrom wird über eine Drossel einer Hohlweckpumpe zugeführt, die niederdruckseitig mit einem Prüfgassensor in Form eines Massenspektrometers verbunden ist. Ein derartiger Prüfgassensor hat eine Öffnung für den Gasdurchtritt, jedoch keine Sensorfläche.

In DE 44 45 829 ist ein Gegenstrom-Schnüffellecksucher beschrieben, der einen Schnüffelschlauch aufweist, welcher mit einer zweistufigen Vakuumpumpe verbunden ist. Der Schnüffelschlauch bildet eine Drossel, welche die Druckdifferenz zwischen dem Atmosphärendruck im Einlassbereich des Schnüffelschlauchs und dem Druck in seinem Auslassbereich aufrecht erhält.

DE 44 08 877 A1 beschreibt einen Test-Gaslecksucher mit einem Massenspektrometer bei dem ein eingesaugter Gasstrom periodisch moduliert wird, um die Empfindlichkeit der Lecksuche zu verbessern.

Die genannte Patentanmeldung 10 2005 021 909 beschreibt einen Schnüffellecksucher mit Prüfgassensor, der Heliumleckraten im Bereich von 10⁻⁷ mbar I/s bis 10⁻³ mbar I/s nachweisen kann. Zu kleineren Leckraten hin ist der Nachweisbereich aufgrund der begrenzten Signalstabilität bzw. der begrenzten Empfindlichkeit beschränkt. Zu höheren Leckraten erfolgt die Begrenzung aufgrund einer möglichen Sensorverseuchung. Bei einer gemessenen Leckrate von 10⁻³ mbar I/s beträgt der Heliumpartialdruck vor dem Sensor etwa 0,05 mbar. Vor Heliumpartialdrücken oberhalb dieser Grenze muss der Sensor geschützt werden. Dies erfolgt durch Umschaltung der Gasführung, so dass das Gerät nach Überschreitung der festgelegten Signalstärke den Heliumnachweis kurzzeitig abschaltet.

Der Erfindung liegt die Aufgabe zugrunde, einen Schnüffellecksucher anzugeben, der einen erweiterten Leckraten-Messbereich hat.

Eine erste Variante des Schnüffellecksuchers nach der vorliegenden Erfindung ist durch den Patentanspruch 1 definiert.

Die Erfindung ermöglicht den Nachweis von Leckraten dadurch, dass ein Teil des angesaugten Gases zur Gasförderpumpe geführt und ein geringerer Anteil dem Sensor zugeführt wird.

Eine zweite Variante der Erfindung nach Anspruch 4 sieht vor, dass die Schnüffelleitung mit einer Ventilvorrichtung verbunden ist, die die Schnüffelleitung wahlweise mit einem von mehreren Einlässen des Saugraums verbindet, wobei diese Einlässe unterschiedlich lange Strömungswege entlang der Sensorfläche des Prüfgassensors bewirken. Diese Variante kann als "Teilflächenvariante" bezeichnet werden.

Bei beiden Varianten ist es vorteilhaft, wenn der vor dem Prüfgassensor angeordnete Saugraum mit einem Belüftungsventil verbunden ist, durch das Umgebungsluft angesaugt werden kann. Auf diese Weise kann die Sensorfläche von Helium freigespült werden. Das Belüftungsventil ist vorzugsweise mit einer Drossel in Reihe geschaltet an die Gasführung angeschlossen.

Durch ein geeignetes Ventil-Drosselsystem kann vor der Sensorfläche ein gewünschter Arbeitsdruck von etwa 250 mbar erzeugt und aufrechterhalten werden.

Im Folgenden werden unter Bezugnahme auf die Zeichnungen Ausführungsbeispiele der Erfindung näher erläutert.

Es zeigen:
- Fig.1: ein Diagramm einer ersten Ausführungsform, die als Flussteilungsvariante bezeichnet wird und
- Fig. 2: ein Diagramm einer zweiten Ausführungsform, die als Teilflächenvariante bezeichnet wird.

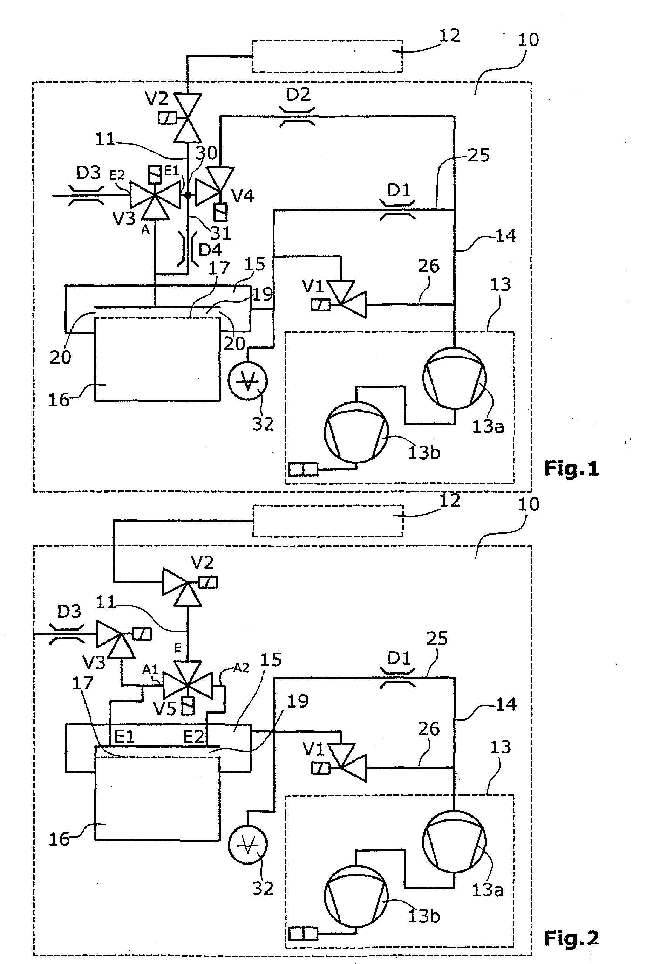

Die in Figur 1 dargestellte Flussteilungsvariante weist ein Grundgerät 10 auf, das über ein Ventil V2 mit einer Schnüffelsonde 12 verbunden ist. Die Schnüffelsonde 12 kann von Hand geführt werden, um das Testobjekt auf Leckstellen zu untersuchen, aus denen Testgas austritt.

Das Grundgerät 10 enthält eine Vakuumpumpe 13, bei der es sich im vorliegenden Beispiel um eine zweistufige Pumpe mit den Pumpstufen 13a und 13b handelt, die als Membranpumpen ausgeführt sind. Die Vakuumpumpe erzeugt einen Enddruck von etwa 3mbar.

Von der Vakuumpumpe 13 führt eine Vakuumleitung 14 zu dem Saugraum 15. Der Saugraum 15 ist vor dem Prüfgassensor 16 gebildet. Die Wände des Saugraums 15 schließen an das Gehäuse des Prüfgassensors 16 an. Die Sensorfläche 17 des Prüfgassensors 16 wird von dem Saugraum 15 umschlossen. Innerhalb des Saugraums 15 befindet sich eine Gasführungsplatte 18, die der Sensorfläche 17 mit Abstand gegenüberliegt und parallel zu dieser angeordnet ist. Die Sensorfläche 17 und die Gasführungsplatte 18 begrenzen den Gasführungsraum 19. Die Schnüffelleitung 11 mündet in den Gasführungsraum 19. Dieser weist an entgegengesetzten Enden seitliche Öffnungen 20 auf, durch die das Gas in den Saugraum 15 eintreten kann. Der Gasführungsraum 19 bewirkt eine Verteilung des Gases vor der Sensorfläche 17.

Der Prüfgassensor 16 ist in der Weise ausgebildet wie der Sensor, der in DE 100 31 882 A1 beschrieben ist. Die Sensorfläche 17 besteht aus einer selektiv für Helium durchlässigen Membran. Im Übrigen enthält der Prüfgassensor 16 einen Penning-Drucksensor oder einen anderen Drucksensor, der ein elektrisches Signal erzeugt, welches den Druck in dem durch eine Quarzmembran abgeschlossenen Gehäuse angibt. Aus diesem Druck wird das Signal für die detektierte Menge an Testgas abgeleitet.

Die Vakuumleitung 14 enthält zwischen der Vakuumpumpe 13 und dem Saugraum 15 eine erste Drossel D1, die die Saugleistung für den NormalBetriebsmodus bestimmt. Die erste Drossel D1 ist durch eine Bypassleitung 26 überbrückt, die ein Ventil V1 enthält.

In einer Lufteinlassleitung befindet sich eine Drossel D3. Das Ventil V3 verbindet entweder den Einlass E1 oder den Einlass E2 mit dem Auslass A. Der Einlass E1 ist mit einem Flussteiler 30 verbunden, welcher durch eine Leitung 31 mit dem Einlass des Prüfgassensors 16 verbunden ist. Die Leitung 31 enthält eine Drossel D4.

Von dem Flussteiler 30 führt ein anderer Weg über ein Ventil V4 und eine Drossel D2 zu der Vakuumleitung 14. Die Drosseln D2 und D4 sind so aufeinander abgestimmt, dass der Fluss durch D2 wesentlich größer ist als derjenige durch D4. Der Fluss durch D2 ist um mindestens 10-mal größer als derjenige durch D4 und insbesondere um mindestens 50-mal. Vorzugsweise beträgt der Fluss durch D2 etwa das Hundertfache des Flusses durch D4.

An den Saugraum 15 ist ein Druckmessgerät 32 angeschlossen.

Beim Normalbetrieb der Flussteilungsvariante wird das durch die Schnüffelleitung 11 über das geöffnete Ventil V2 eingesogene Gas durch das Ventil V3 zum Prüfgassensor 16 geführt. Das Ventil V4 ist geschlossen. Mit dem Ventil-Drosselsystem V1, D1 wird vor der Sensorfläche 17 ein Arbeitsdruck von etwa 250 mbar aufrechterhalten.

Übersteigt die Konzentration des Testgases im geschnüffelten Gas eine vorgegebene Grenze, schaltet das System automatisch in den Grobbetrieb. Hierbei wird das geschnüffelte Gas durch das Ventil V2 über den Flussteiler 30 zur Leitung 31 geführt. An der Verzweigungsstelle 30 werden ein erster Teilstrom über die Drossel D4 und ein zweiter Teilstrom über das Ventil V4 und die Drossel D2 gleichzeitig erzeugt. Der geringere Teil, der durch die Drossel D4 zum Prüfgassensor 16 gelangt, wird an der Sensorfläche 17 entlang zur Vakuumpumpe 13 geführt.

Während des Grobbetriebs ist das Ventil V3 auf den Einlass E2 geschaltet, während der Einlass E1 gesperrt ist. Über den Einlass E2 wird Luft angesaugt. Dadurch erfolgt ein schneller Gasaustausch vor der Sensorfläche 17 mittels des Spülgases Luft. Die Drosseln D2, D3 und D4 sind so dimensioniert, dass die gewünschte Flussteilung realisiert wird, beispielsweise im Verhältnis 1:100.

Der zusätzliche Spülgasstrom durch die Drossel D3 bewirkt, dass das Gas vor der Sensorfläche 17 innerhalb kurzer Zeit komplett ausgetauscht wird. Dieser schnelle Austausch würde durch einen Fluss ausschließlich durch die Drossel D4 nicht erreicht.

Das Ausführungsbeispiel von Figur 2 entspricht der Teilflächenvariante, wobei bei Grobbetrieb nur ein Bruchteil der Sensorfläche 17 von dem Testgas überströmt wird. Diejenigen Komponenten der zweiten Variante, die bei der ersten Variante ebenfalls vorhanden waren, werden nachstehend nicht noch einmal erläutert, so dass sich die folgende Beschreibung auf die Unterschiede beschränkt.

Gemäß Figur 2 ist die Schnüffelleitung 11 hinter dem Ventil V2 mit dem Einlass E eines Ventils V5 verbunden, das zwei Auslässe A1 und A2 hat. Die Auslässe A1, A2 sind mit unterschiedlichen Einlässen E1, E2 des Gasführungsraums 19 verbunden. Der erste Einlass E1 befindet sich an demjenigen Ende der Sensorfläche 17, die der Öffnung 20 abgewandt ist, während der Einlass E2 sich näher an der Öffnung 20 befindet. Bei dem vorliegenden Ausführungsbeispiel ist mindestens eine Öffnung 20 nur an einem Ende des Prüfgassensors 16 vorgesehen, so dass das einströmende Gas, in Abhängigkeit von der Position des jeweiligen Einlasses, unterschiedlich weite Wege bis zur Öffnung 20 nehmen muss. Das Belüftungsventil V3 ist mit dem Einlass E1 verbunden, der dem längeren Strömungsweg entlang der Sensorfläche 17 entspricht.

Während des Normalbetriebes der Teilflächenvariante nach Figur 2 wird das mit der Schnüffelsonde 12 eingesogene Gas über das Ventil V2 und anschließend über das Ventil V5 zum Prüfgassensor 16 geführt. Das Ventil V5 ist auf die Stellung E-A1 gestellt, so dass das Gas dem Einlass E1 des Prüfgassensors zugeführt wird und die gesamte Sensorfläche 17 überstreicht. Vor dem Sensor 16 wird ein Arbeitsdruck von etwa 250 mbar aufrechtgehalten.

Während des Grobbetriebes wird das Ventil V5 auf die Stellung E-A2 umgeschaltet und dem rechten Einlass E2 des Prüfgassensors 16 zugeführt. Von hieraus wird nur eine Teilfläche der Sensorfläche 17 überstrichen. Danach gelangt das Gas direkt zu dem Pumpsystem. Mit dem Einlass über der Drossel D3 und dem Ventil V3 wird ein zusätzlicher Luftstrom entlang der Sensorfläche 17 erzeugt, wodurch verhindert wird, dass sich Helium vor dem Sensor anreichern kann oder dass hohe Testgaskonzentrationen dort verweilen.

Es ist auch möglich, beide beschriebenen Varianten zu kombinieren.

## Patentansprüche

1. Schnüffellecksucher mit Prüfgassensor (16), mit einer Schnüffelsonde (12), die über eine Schnüffelleitung (11) mit dem Prüfgassensor (16) verbunden ist, einer mit einer Vakuumpumpe (13) verbundenen Vakuumleitung (14) und einem Flussteiler (30),
**dadurch gekennzeichnet,**
**dass** vor einer Sensorfläche (17) des Prüfgassensors (16) ein Saugraum (15) angeordnet ist, der mit der Vakuumleitung (14) verbunden ist, und dass ein Ventil (V4), das die Schnüffelleitung (11) mit der Vakuumleitung (14) verbinden kann, wobei die Schnüffelleitung (11) über den Flussteiler (30) gleichzeitig über eine Drossel (D4) enthaltende Leitung (31) mit dem Saugraum (15) des Prüfgassensors (16) und über das geöffnete Ventil (V4) mit der Vakuumleitung (14) verbindbar ist.

2. Schnüffellecksucher nach Anspruch 1, **dadurch gekennzeichnet, dass** die Vakuumleitung (14) eine weitere Drossel (D2) enthält.

3. Schnüffellecksucher nach Anspruch 2, **dadurch gekennzeichnet, dass** der Fluss durch die Drossel (D2) der Vakuumleitung (14) um mindestens den Faktor 10 größer ist als derjenige durch die Drossel (D4) der Leitung (31).

4. Schnüffellecksucher mit Prüfgassensor (16), mit einer Schnüffelsonde (12), die über eine Schnüffelleitung (11) mit dem Prüfgassensor (16) verbunden ist, einer mit einer Vakuumpumpe (13) verbundenen Vakuumleitung (14), **dadurch gekennzeichnet, dass** vor einer Sensorfläche (17) des Prüfgassensors (16), ein Saugraum (15) angeordnet ist, der mit der Vakuumleitung (14) verbunden ist, wobei die Schnüffelleitung (11) mit einer Ventilvorrichtung (V5) verbunden ist, die die Schnüffelleitung wahlweise mit einem von mehreren Einlässen (E1, E2) des Prüfgassensors (16) verbindet, wobei diese Einlässe unterschiedlich lange Strömungswege entlang der Sensorfläche (17) bewirken.

5. Schnüffellecksucher nach einem der Ansprüche 1 - 4, **dadurch gekennzeichnet, dass** eine von der Vakuumpumpe (13) zu dem Saugraum (15) führende Vakuumleitung (14) eine erste Drossel (D1) enthält und dass die erste Drossel (D1) durch eine ein Ventil (V1) enthaltende ungedrosselte Bypassleitung (26) überbrückbar ist.

6. Schnüffellecksucher nach einem der Ansprüche 1 - 5, **dadurch gekennzeichnet, dass** der Saugraum (15) mit einem Belüftungsventil (V3) verbunden ist.

7. Schnüffellecksucher nach Anspruch 6, **dadurch gekennzeichnet, dass** das Belüftungsventil (V3) mit einer Drossel (D3) in Reihe geschaltet an einen Gasführungsraum (19) des Prüfgassensors (16) angeschlossen ist.

8. Schnüffellecksucher nach Anspruch 5, **gekennzeichnet durch** einen NormalBetriebsmodus, in dem die Bypassleitung (26) gesperrt und eine die erste Drossel (D1) enthaltende erste Leitung (25) geöffnet ist.

9. Schnüffellecksucher nach Anspruch 8, **gekennzeichnet durch** einen Verseuchungsschutz-Betriebsmodus, bei dem die Bypassleitung (26) und die erste Leitung (25) geöffnet sind.

10. Schnüffellecksucher nach einem der Ansprüche 1 - 9, **gekennzeichnet durch** einen Verseuchungsschutzzustand, in dem ein in der Schnüffelleitung (11) enthaltenes Ventil (V2) geschlossen ist.

## Claims

1. A sniffing leak detector comprising a test gas sensor (16), a sniffing probe (12) connected to the test gas sensor (16) via a sniffing line (11), a vacuum line (14) connected to a vacuum pump (13), and a flow divider (30), **characterized in**
**that** a suction chamber (15) is arranged in front of a sensor surface (17) of the test gas sensor (16), said suction chamber being connected to the vacuum line (14), and that a valve (V4) is provided that is adapted to connect the sniffing line (11) to the vacuum line (14), wherein by means of said flow divider (30), the sniffing line (11) is adapted to be connected simultaneously to the suction chamber (15) of the test gas sensor (16) via a line (31) including a throttle (D4) and to the vacuum line (14) via the open valve (V4).

2. The sniffing leak detector of claim 1, **characterized in that** the vacuum line (14) includes another throttle (D2).

3. The sniffing leak detector of claim 2, **characterized in that** the flow through the throttle (D2) of the vacuum line (14) is greater by at least a factor of 10 than the flow through the throttle (D4) of the line (31).

4. A sniffing leak detector with a test gas sensor (16), a sniffing probe (12) connected to the test gas sensor (16) via a sniffing line (11), a vacuum line (14) connected to a vacuum pump (13), **characterized in that** a suction chamber (15) is arranged in front of a sensor surface (17) of the test gas sensor (16), said suction chamber being connected to the vacuum line (14), wherein the sniffing line (11) is connected to a valve device (V5) selectively connecting the sniffing line to one of a plurality of inlets (E1, E2) of the test gas sensor (16), these inlets causing flow paths of different lengths across the sensor surface (17).

5. The sniffing leak detector of one of claims 1-4, **characterized in that** a vacuum line (14) leading from the vacuum pump (13) to the suction chamber (15) includes a first throttle (D1), and that the first throttle (D1) can be shunted by an unrestricted bypass line (26) including a valve (V1).

6. The sniffing leak detector of one of claims 1 - 5, **characterized in that** the suction chamber (15) is connected to a venting valve (V3).

7. The sniffing leak detector of claim 6, **characterized in that** the venting valve (V3) is connected, in series with a throttle (D3), to a gas guiding chamber (19) of the test gas sensor (16).

8. The sniffing leak detector of claim 5, **characterized by** a normal operation mode in which the bypass line (26) is blocked and a first line (25) including the first throttle (D1) is open.

9. The sniffing leak detector of claim 8, **characterized by** a contamination protection mode in which the bypass line (26) and the first line (25) are open.

10. The sniffing leak detector of one of claims 1-9, **characterized by** a contamination protection condition in which a valve (V2) in the sniffing line (11) is closed.

## Revendications

1. Détecteur renifleur de fuites ayant un détecteur de gaz de test (16), comprenant une sonde renifleuse (12) connectée audit détecteur de gaz de test (16) par une conduite de reniflement (11), une conduite à vide (14) connectée à une pompe à vide (13), et un diviseur de débit (30), **caractérisé en ce**
**qu'**une chambre d'aspiration (15) est disposée avant une face de détection (17) dudit détecteur de gaz de test (16), ladite chambre étant connectée à ladite conduite à vide (14), et qu'une soupape (V4) est prévue qui est apte à connecter ladite conduite de reniflement (11) à ladite conduite à vide (14), ladite conduite de reniflement (11) étant apte à être connectée, par l'intermédiaire dudit diviseur de débit (30), simultanément à ladite chambre d'aspiration (15) dudit détecteur de gaz de test (16) par une conduite (31) comprenant un étrangleur (D4) et à ladite conduite à vide (14) par la soupape (V4) ouverte.

2. Détecteur renifleur de fuites selon la revendication 1, **caractérisé en ce que** ladite conduite à vide (14) comprend un autre étrangleur (D2).

3. Détecteur renifleur de fuites selon la revendication 2, **caractérisé en ce que** le débit à travers ledit étrangleur (D2) de la conduite à vide (14) est supérieur à celui à travers ledit étrangleur (D4) de la conduite (31) par au moins le facteur 10.

4. Détecteur renifleur de fuites ayant un détecteur de gaz de test (16), comprenant une sonde renifleuse (12) connectée audit détecteur de gaz de test (16) par une conduite de reniflement (11), une conduite à vide (14) connectée à une pompe à vide (13),
**caractérisé en ce**
**qu'**une chambre d'aspiration (15) est disposée avant une face de détection (17) dudit détecteur de gaz de test (16), ladite chambre étant connectée à ladite conduite à vide (14), ladite conduite de reniflement (11) étant connectée à un dispositif de soupape (V5) sélectivement connectant la conduite de reniflement à une de plusieurs entrées (E1, E2) dudit détecteur de gaz de test (16), ces entrées effectuant des trajectoires d'écoulement de différentes longueurs le long de la face du détecteur (17).

5. Détecteur renifleur de fuites selon l'une quelconque des revendications 1-4, **caractérisé en ce qu'**une conduite à vide (14), s'étendant de la pompe à vide (13) à ladite chambre d'aspiration (15), comprend un premier étrangleur (D1), et que ledit premier étrangleur (D1) peut être court-circuité par une conduite de dérivation (26) non-étranglée et comprenant une soupape (V1).

6. Détecteur renifleur de fuites selon l'une quelconque des revendications 1-5, **caractérisé en ce que** ladite chambre d'aspiration (15) est connectée à une soupape d'aération (V3).

7. Détecteur renifleur de fuites selon la revendication 6, **caractérisé en ce que** ladite soupape d'aération (V3) est connectée, en série avec un étrangleur (D3), à une chambre de guidage de gaz (19) du détecteur de gaz de test (16).

8. Détecteur renifleur de fuites selon la revendication 5, **caractérisé par** un mode d'opération normal dans lequel la conduite de dérivation (26) est bloquée et une première conduite (25) avec ledit premier étrangleur (D1) est ouverte.

9. Détecteur renifleur de fuites selon la revendication 8, **caractérisé par** un mode d'opération anticontamination dans lequel ladite conduite de dérivation (26) et ladite première conduite (25) sont ouvertes.

10. Détecteur renifleur de fuites selon l'une quelconque des revendications 1-9, **caractérisé par** un état d'anticontamination dans lequel une soupape (V2) dans la conduite de reniflement (11) est fermée.
